# EUROPEAN PATENT SPECIFICATION

(11) **EP 3 092 888 B1**
(45) Date of publication and mention of the grant of the patent: **28.03.2018**
(21) Application number: 16167059.1
(22) Date of filing: 26.04.2016
(51) Int. Cl.: A01D 78/10

(54) **AGRICULTURAL MACHINE**
LANDWIRTSCHAFTLICHE MASCHINE
MACHINE AGRICOLE

(30) Priority: 12.05.2015 NL 2014796
(43) Date of publication of application: 16.11.2016
(73) Proprietor: Forage Innovations B.V., 3147 PB Maassluis (NL)
(72) Inventor: VAN DER LELIJ, Bart, 3147 PB Maassluis (NL)
(74) Representative: AGCO Intellectual Property Department

(56) References cited:
- EP-A1- 0 517 632
- EP-A2- 0 872 170
- EP-A2- 2 281 435
- FR-A1- 2 675 979

## Description

The invention relates to an agricultural machine, in particular a haymaking machine, for example a rotary rake, the agricultural machine comprising a central frame, at least one carrier arm which being connected to the central frame in such a way that the carrier arm can pivot about a horizontal arm axis in working position, a working unit being connected to the carrier arm in such a way that the working unit can be displaced, as seen in the longitudinal direction of the carrier arm, with respect to the carrier arm for adjusting the position of working unit relative to the central frame, a pressure relief device for applying an upward relief force to the carrier arm in the working position, said pressure relief device being coupled with one end to the central frame and the other to the carrier arm.

Such an agricultural machine is known from EP0872170-A. Herein a rotary rake with four rotors connected via arms to a central frame is described. The rotors rotate around vertical axes and rake the crop in a central swath behind the machine. The position of the front two rotors relative to the central frame is adjustable via a hydraulic cylinder at the corresponding arms. In this way the working width is adjustable. In order to relief the weight of the rotors, springs are provided at said arms. It is common to manually adjust the force of such a relief spring by means of crews.

Disadvantage of the above mentioned machine is that at large working widths the wheels of the rotor may make tracks in the soil.

It is an object of the invention to overcome the above mentioned drawback and to provide a machine with a better and easy adjustable weight relief for all working widths.

This is performed by an agricultural machine of the above mentioned kind with the features of the characterizing part of claim 1. What is meant with the distance between the working unit and the arm axis is positively coupled with the relief force applied by the pressure relief device is that a larger distance between the working unit and the arm axis of the carrier arm induces a larger relief force. This has the result that the net weight of the working unit is lowered and the working unit is damaging the soil less. This mechanism can be explained by basic mechanics. When the position of the working unit relative to the arm is enlarged, also the distance of the point of gravity of the whole carrier arm including the working unit relative to the arm axis is increased. Therefore the gravity moment - which is the mathematical product of the gravity force and the distance to the arm axis - is increased. The tilting moment is the product of the vertical relief force acting on the carrier arm and the distance of the acting point of this relief force to the arm axis. As the relief force is increased, the tilting moment is increased. The difference between the tilting moment and the gravity moment will remain more or less equal, which result in a (less) unchanged net weight.

It is noted that EP 2281435 A2 discloses a combination consisting of front left and right belt rakes and a rear central delivery rotary rake with two raking rotors. The combination has a carrier beam oriented in a direction of travel. Each belt rake is connected to the carrier beam by means of an outer and inner carrier arm portion which are pivotally connected to each other. The outer and inner carrier arm portions can be actuated by hydraulic cylinders. Each belt rake can be moved transversely to the direction of travel for adjusting the maximum working width. The belt rakes also include a ground pressure relief device.

It is furthermore noted that FR 2675979 A1 discloses an agricultural machine having a working width which can be adjusted. The agricultural machine comprises working tools which are connected by means of pivoting arms to the machine frame in such a manner that, for adjusting the working width of the machine, the distance between the machine frame and the working tools can be changed.

In an embodiment of the invention, the pressure relief device comprises a pressure relief element designed as a spring and the relief force is dependent from the length of the spring. A spring is a robust and cheap element. By changing the length of the spring an easy adjustment is possible.

In an alternative embodiment according the invention the pressure relief device comprises pressure relief element designed as a hydraulic cylinder with a chamber fluidly coupled to a gas accumulator. By using a gas accumulator, easy manual adjustment is possible by changing the hydraulic pressure of the hydraulic cylinder. This is commonly performed by connecting the hydraulic circuit via a valve to the hydraulic connection of a tractor. By adding more oil in the circuit the operator can increase the pressure and therewith increase the relief force.

In a favorite embodiment according the invention, the carrier arm comprises a lever coupled to the carrier arm via a lever axis, coupled to the pressure relief element and coupled to a drawing element, said drawing element connects the working unit with the lever. In this way a change in the position of the working unit on the carrier arm is directly coupled to the pressure relief element. As the drawing element only needs to pass a drawing force, this element can be simple, e.g. a cable.

In another embodiment according invention, the agricultural machine comprises a lifting element for lifting the carrier arm from a working position into a transport and/or headland position, said lifting element being coupled at one end to the lever axis and at the other end to the central frame. In this way only one single axis is needed for attaching the lever and attaching the lifting cylinder to the carrier arm, which provides a robust and simple solution.

In again a favorite embodiment according the invention, the lifting element comprising a hydraulic transport cylinder and a hydraulic headstock cylinder which are coupled to each other. The coupling can be performed by connecting the bottoms of both cylinders or by connecting the cylinder rods of both cylinders. This provides a relatively simple construction in which two functions (lifting into/out of headland position and lifting into/out of transport position) are combined.

In a very favorite embodiment according the invention, the working unit is connected to a prism carriage which prism carriage is displaceable within a prism guide along at least a part of the carrier arm. Such a construction makes it possible for the working unit to slide along a large part of the carrier arm and that the attachment of the working unit to the carrier arm can be at a position closer to the arm axis than the position of attachment of the lifting cylinder or than the position of attachment of the pressure relief element of the pressure relief device. Additionally this construction makes it also possible to connect a lifting cylinder or a pressure relief element of a pressure relief device at a relatively large distance from the arm axis to the carrier arm. Therefore the working unit can be lifted or relieved with a relatively low force.

According an embodiment according the invention, the carrier arm comprises a first arm attached to the central frame and a second arm movable attached to the first arm which second arm is connected to the working unit. Preferably, the second arm is telescopically movably relative to the first arm. Such a telescopic construction is a robust construction without large gaps which might get impeded with dirt or crops.

Alternatively the second arm is pivotable relative to the first arm. Preferable is a construction with a horizontal pivot axis in working position or with a vertical axis in working position. Such a pivotable construction is a robust construction without gaps which might get impeded.

Preferably, the carrier arm comprises a length element for adjusting the position of the working unit in at least the working position, which length element comprises an adjustable bar. This adjusting bar can be put into different positions manually which makes an easy and cheap adjustment of the position of the working unit and thereby the working width possible.

Alternatively, the carrier arm comprises a length element for adjusting the position of the working unit in at least the working position, which length element comprises a hydraulic adjustment cylinder. It is advantageous to construct this cylinder inside the carrier arm. This protects this cylinder for damages and pollution.

In a preferred embodiment, the carrier arm comprise a distance sensor for detecting the distance of the working unit relative to the arm axis and for emitting a distance signal and whereby the pressure relief device is controllable by the distance signal. This makes a more intelligent adjustment of the position of working unit possible. Advantageously such a distance sensor is incorporated in the hydraulic cylinder of the length element.

To provide a further preferred embodiment according the invention, the pressure relief element is the lifting element. In such a construction the lifting and relief function is performed by one single element, preferable a hydraulic cylinder. This gives a cheap and simple construction.

In again a preferred embodiment the working unit is a rake wheel rotatable around a vertical axis or a mowing unit. These kind of working units need to precisely follow the ground. Therefore just the right pressure with which the working units rest on the ground is needed.

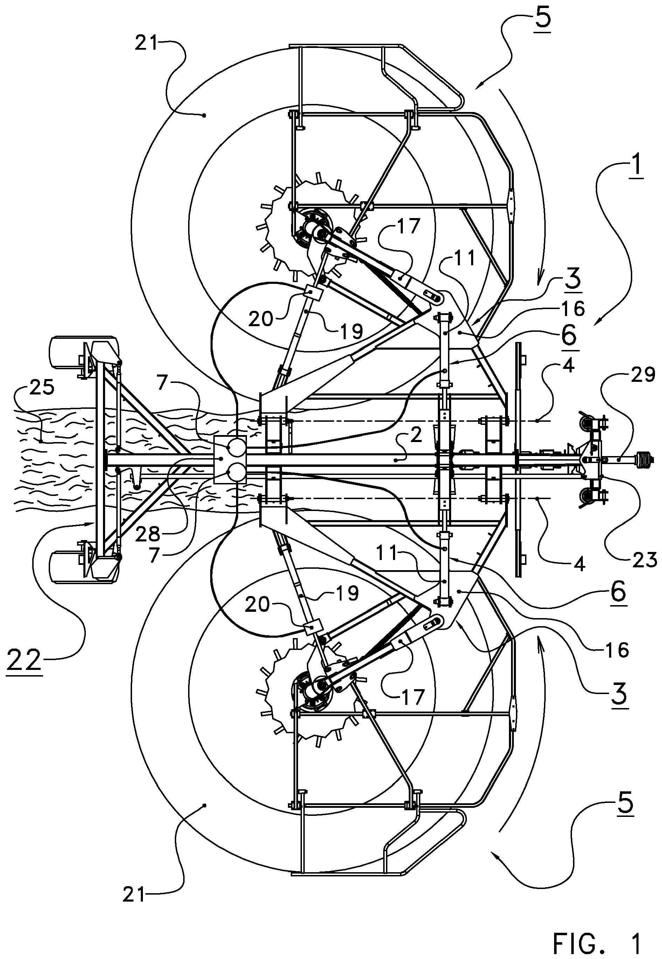

In a further embodiment according the invention, the drawing element is connected to an elongate element which is disengagably connectable to the working unit. Such a connection forms a robust construction which can be effective only in the positions when the working unit is in its outermost position on the arm. So in those positions when an extra relief force is necessary. Preferably, the elongated element comprises a hook, in particular with two hook parts, one for each side of the carrier arm, in order to apply at both sides of the carrier arm the same force, making the relief forces on the construction symmetrical. The invention will be explained hereinafter in further detail with reference to an exemplary embodiment shown in Figures 1 to 3.
Figure 1 is a view from above of a first embodiment in the working position of an agricultural machine according to the invention,
Figure 2 is a more detailed view of an carrier arm of a second embodiment of an agricultural machine according to the invention, and
Figures 3 is a more detailed view of an carrier arm of a third embodiment of an agricultural machine according to the invention.

Figure 1 shows an agricultural machine 1, in particular a haymaking machine, in the form of a rotary rake, the agricultural machine 1 comprising: a central frame 2, at least one carrier arm 3 which being connected to the central frame 2 in such a way that the carrier arm 3 can pivot about a horizontal arm axis 4 in working position, a working unit 5 being connected to the carrier arm 3 in such a way that the working unit 5 can be displaced, as seen in the longitudinal direction of the carrier arm, with respect to the carrier arm 3 for adjusting the position of working unit 5 relative to the central frame 2, a pressure relief device 6 for applying an upward relief force to the carrier arm 3 in the working position, said pressure relief element 6 being coupled with one end to the central frame 2 and the other to the carrier arm 3 whereby the pressure relief device 6 is designed in such a way that in working position of the agricultural machine 1, the distance between the working unit 5 and the arm axis 4 is positively coupled with the relief force applied by the pressure relief device 6 such that a larger distance induces a larger relief force.

In this machine, the working unit 5 is a rake wheel 21 rotatable around a vertical axis. The machine is a so-called central delivery rake with two rake wheels 21 of the well-known steered arm type, which rake the crop laying on the ground to a central swath 25. The turning directing is depicted by arrows.

The agricultural machine 1 comprises a lifting element 11 for lifting the carrier arm 3 from a working position into a transport and/or headland position. Said lifting element 11 comprises a hydraulic transport cylinder 12 and a hydraulic headstock cylinder 13 which are coupled to each other via a connection of the cylinder rods of the pistons of both cylinders 11, 13. The carrier arm 3 comprises a first arm 16 attached to the central frame 2 and a second arm 17 movable attached to the first arm 16 which second arm 17 is connected to the working unit 5. The second arm 17 is pivotable relative to the first arm 16 around a vertical arm axis 4.

The carrier arm 3 comprises a length element 19 for adjusting the position of the working unit 5 in at least the working position, which length element 19 comprises a hydraulic cylinder and said carrier arm 3 comprises a distance sensor 20 for detecting the distance of the working unit 5 relative to the arm axis 4 and for emitting a distance signal and whereby the pressure relief device 6 is controllable by the distance signal. The distance sensor 20 is incorporated in the length element 19. The pressure relief element is the lifting element 11 and comprises a hydraulic cylinder with a chamber fluidly coupled to a gas accumulator 7.

To control the pressure relief element, a control box 28 attached to the central frame 2 is provided. This control box 28 is connected to the distance sensor 20 for receiving the distance signal. A hydraulic line stretches from the control box 28 to the pressure relief device 6 in order to control the relief force.

The central frame 2 comprises a coupling device 23 for coupling the agricultural machine 1 to a not depicted tractor. The coupling device 23 comprises two coupling points for coupling to the respective two standard lifting arms of the tractor. Both rake wheels 21 are driven via the drive axis 29 by the tractor. The coupling device 23 is pivotable around a vertical coupling axis connected to the central frame 2 of the agricultural machine. The central frame 2 comprises a wheel set 22 for supporting the central frame 2. A turning movement of the tractor is in a known manner transferred via a steering rod to the wheels of the wheel set 22 to make the agricultural machine 1 follow the tractor in its track. As an alternative, the central frame 2 of the agricultural machine 1 can also directly via a single coupling point be coupled to the tractor.

When the operator wants to change the working width, he activates the adjustment cylinder 19. The distance sensor 20 measures the position of this adjustment cylinder 19 and transfers the distance signal to the control box 28. The electronics in this control box 28 then electrically activates valves which put more liquid into or let liquid out of the line leading to the lifting cylinder 11. This lifting cylinder 11 functions as a pressure relief element of the pressure relief device 6 and applies more (in case of a larger measured distance) or less force (in case of a smaller measured distance) on the first arm. In this way a larger distance to the arm axis 4 is positively coupled with the relief force to apply a larger relief force. The pressure regulation can also be performed in other known ways like by means of an electrical operable pump for adding oil into the pressure relief circuit.

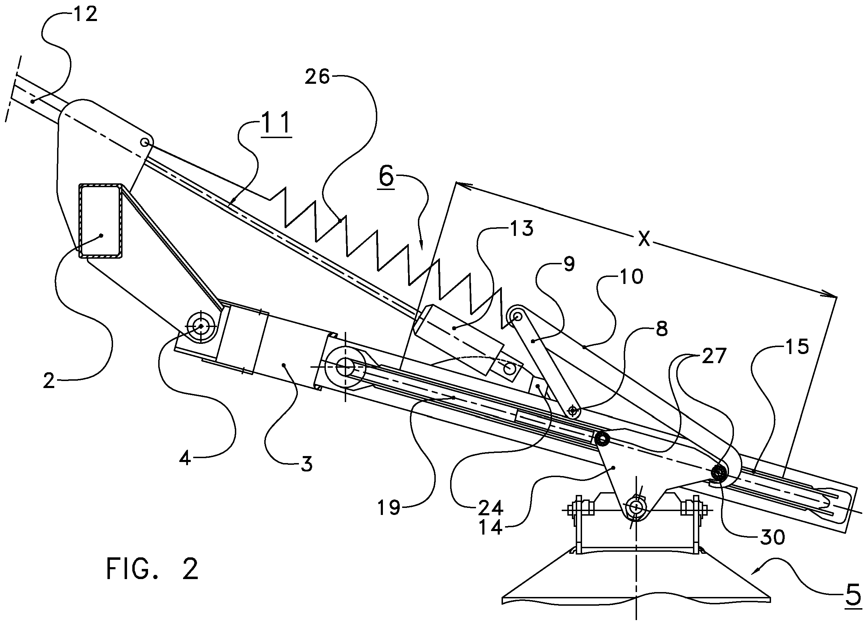

Figure 2 shows a carrier arm 3 of a second embodiment. The working unit 5 is connected to a prism carriage 14 which prism carriage 14 is displaceable within a prism guide 15 along at least a part of the carrier arm 3. The carrier arm 3 comprises a length element 19 for adjusting the position of the working unit 5 in at least the working position, which length element 19 comprises a hydraulic adjustment cylinder 19. Said hydraulic adjustment cylinder 19 is incorporated inside the hollow carrier arm 3 and is of the double acting type. The carrier arm 3 comprises a lever 9 coupled to the carrier arm 3 via a lever axis 8, coupled to the pressure relief element 26 and coupled to a drawing element 10, said drawing element 10 connects the working unit 5 with the lever 9. The drawing element 10 is connected to an elongate element in the form of a hook which is disengagably connectable to the working unit 5. The agricultural machine 1 further comprises a lifting element 11 for lifting the carrier arm 3 from a working position into a transport and/or headland position. The lifting element 11 comprises a hydraulic transport cylinder 12 and a smaller hydraulic headstock cylinder 13 which are coupled to each other via the corresponding piston rods. For easy guidance the prism carriage 14 comprises four prism wheels 27 (two at each side of the carrier arm 3) which follow the rails of the prism guide 15. The maximum displacement of the working unit 5 is indicated by "X"

A stop 24 is provided for limiting the movement of the lever 9. In case the working unit 5 has reached the position in which the lever 9 is halting against the stop 24 (see figure 2), any further movement of the prism carriage 14 towards the central frame 2 does not change the relief force applied by the pressure relief element 26 to the carrier arm 3. When the prism carriage 14 is further being moved towards the central frame 2, the hook 10 will disengage from the outer pin 30 and no relief force will be applied directly on the prism carriage 14. Outer pin 30 comprises the elongated axis of the outer one of the prism wheels. The spring 26 will now apply the relief force directly on lever axis 8. When the hook 10 is disengaged from the outer pin 30 the relief force applied on the working unit 5 is independent from the distance between the working unit 5 and the central frame 2.

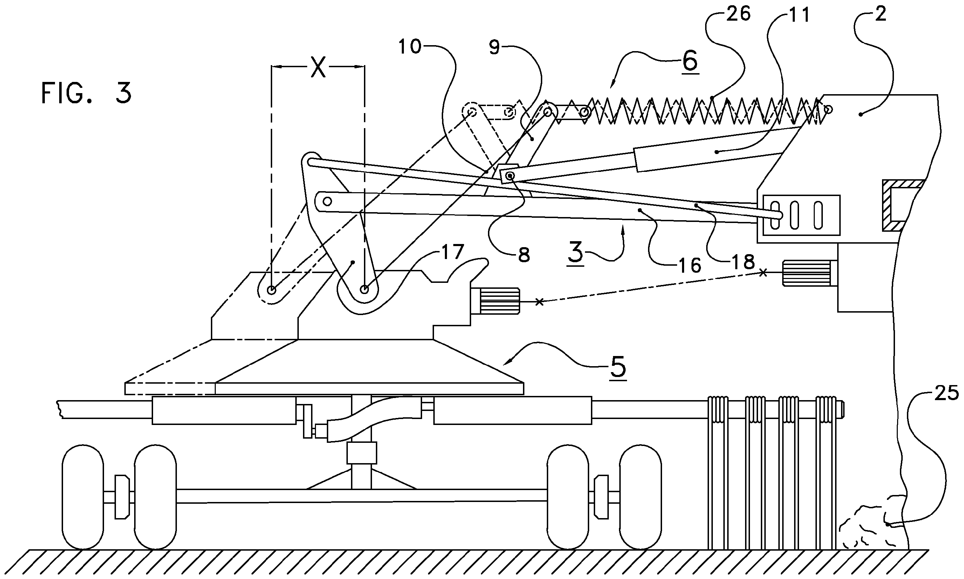

An alternative embodiment of the drawing element 10 is a flexible cable 10 which connects the prism carriage 14 with the lever arm 9. This embodiment is depicted in in figure 3.

When the operator wants to enlarge the working width of rake e.g. because of a larger swath to be formed, he opens the hydraulic line to the double acting adjustment cylinder 19. This cylinder 19 pushes the prism carriage 14 outwardly. At the same time the drawing element 10 draws via the lever 9 the spring 26 outwardly. This spring 26 applies now a higher relief force on the prism carriage 14 which higher force compensates for the higher moment the weight of the working unit 5 has relative to the arm axis 4 due to the larger distance of the working unit 5 to the arm axis 4.

Figure 3 shows a carrier arm 3 of a third embodiment. The carrier arm 3 comprises a first arm 16 attached to the central frame 2 and a second arm 17 movable attached to the first arm 16 which second arm 17 is connected to the working unit 5. The second arm 17 is pivotable relative to the first arm 16 around a horizontal axis. The carrier arm 3 comprises a length element for adjusting the position of the working unit 5 in at least the working position, which length element comprises an adjustable bar 18. This bar 18 can manually be set into one out of three different holes for adjusting the distance of the working unit 5 relative to the arm axis 4 and therefore changing the working width of the agricultural machine 1. The adjustable bar 18 is connected to the top of a second arm 17 which acts as a lever, whereby the working unit 5 is connected to the lower point of the second arm 17 beneath the pivot axis. Only one of the two arms 16, 17 is shown. The maximum displacement of the working unit 5 is indicated by "X". In a non-shown alternative, the adjustable bar comprises a hydraulic cylinder for adjusting the working width by activation from a distance. The effect of a change of position of the working unit 5 on the relief force is similar as described in the second embodiment.

In the embodiments described, the agricultural machine 1 is described as a rotary rake with 2 rake wheels for raking crops, pulled and driven by a tractor. However the invention is not limited to such a machine. The machine can comprise any number of working units 5. The agricultural machine 1 can be of any type e.g. a mower in which de working unit 5 is a mowing unit. The agricultural machine 1 can also be a self-propelled machine, like a self-propelled mower. In a preferred embodiment of such a self-propelled mower, the machine comprises mowing units at the front and two at the sides of the main frame.

Described is a manually adjustment of the position of the working element 5. However this adjustment can also be performed in a known automatic way by means of a control unit, for example for automatically adjust the working width of the agricultural machine 1 at the edge of an angled field.

## Claims

1. An agricultural machine (1), in particular a haymaking machine, for example a rotary rake, the agricultural machine (1)comprising:
- a central frame (2),
- at least one carrier arm (3) which being connected to the central frame (2) in such a way that the carrier arm (3) can pivot about a horizontal arm axis (4) in working position,
- a working unit (5) being connected to the carrier arm (3) in such a way that the working unit (5) can be displaced, as seen in the longitudinal direction of the carrier arm (3), with respect to the carrier arm (3) for adjusting the position of working unit (5) relative to the central frame (2),
- a pressure relief device (6) for applying an upward relief force to the carrier arm (3) in the working position, said pressure relief device (6) being coupled with one end to the central frame (2) and the other to the carrier arm (3), **characterized in that** the pressure relief device (6) is designed in such a way that in working position of the agricultural machine (1), the distance between the working unit (5) and the arm axis (4) is positively coupled with the relief force applied by the pressure relief device (6) such that a larger distance induces a larger relief force.

2. An agricultural machine (1) according conclusion 1, **characterized in that** pressure relief device (6) comprises a pressure relief element designed as a spring (26) and the relief force is dependent from the length of the spring (26).

3. An agricultural machine (1) according conclusion 1, **characterized in that** pressure relief device (6) comprises a pressure relief element designed as a hydraulic cylinder (11) with a chamber fluidly coupled to a gas accumulator (7).

4. An agricultural machine (1) according to conclusion 2 or 3, **characterized in that** the carrier arm (3) comprises a lever (9) coupled to the carrier arm (3) via a lever axis (8), coupled to the pressure relief element (26) and coupled to a drawing element (10), said drawing element (10) connects the working unit (5) with the lever (9).

5. An agricultural machine (1) according to one of the preceding claims, **characterized in that** agricultural machine (1) comprises a lifting element (11) for lifting the carrier arm (3) from a working position into a transport and/or headland position, said lifting element (11) being coupled at one end to the lever axis (8) and at the other end to the central frame (2).

6. An agricultural machine (1) according claim 5, **characterized in that** the lifting element (11) comprising a hydraulic transport cylinder (12) and a hydraulic headstock cylinder (13) which are coupled to each other.

7. An agricultural machine (1) according to one of the preceding claims, **characterized in that** the working unit (5) is connected to a prism carriage (14) which prism carriage (14) is displaceable within a prism guide (15) along at least a part of the carrier arm (3).

8. An agricultural machine (1) according to one of the claims 1 to 6, **characterized in that** the carrier arm (3) comprises a first arm (16) attached to the central frame (2) and a second arm (17) movable attached to the first arm (16) which second arm (17) is connected to the working unit (5).

9. An agricultural machine (1) according claim 8, **characterized in that** the second arm (17) is telescopically movably relative to the first arm (16).

10. An agricultural machine (1) according claim 8, **characterized in that** the second arm (17) is pivotable relative to the first arm (16).

11. An agricultural machine (1) according to one of the preceding claims, **characterized in that** the carrier arm (3) comprises a length element for adjusting the position of the working unit (5) in at least the working position, which length element comprises an adjustable bar (18).

12. An agricultural machine (1) according to one of the preceding claims, **characterized in that** the carrier arm (3) comprises a length element for adjusting the position of the working unit (5) in at least the working position relative to the arm axis (4), which length element comprises a hydraulic adjustment cylinder (19).

13. An agricultural machine (1) according to one of the preceding claims, **characterized in that** the carrier arm (3) comprises a distance sensor (20) for detecting the distance of the working unit (5) relative to the arm axis (4) and for emitting a distance signal and whereby the pressure relief device (6) is controllable by the distance signal.

14. An agricultural machine (1) according claim 13, **characterized in that** the pressure relief element (6) is the lifting element (11).

15. An agricultural machine (1) according to one of the preceding claims, **characterized in that** working unit (5) is a rake wheel (21) rotatable around a vertical axis or a mowing unit.

16. An agricultural machine according to anyone of claims 4 to 15, **characterized in that** the drawing element (10) is connected to an elongate element which is disengagably connectable to the working unit (5).

## Patentansprüche

1. Landwirtschaftliche Maschine (1), insbesondere eine Heumachmaschine, z. B. ein Heuwender, wobei die landwirtschaftliche Maschine (1) Folgendes aufweist:
- einen Zentralrahmen (2),
- mindestens einen Trägerarm (3), der mit dem Zentralrahmen (2) in einer solchen Weise verbunden ist, dass der Trägerarm (3) um eine horizontale Armachse (4) in eine Arbeitsposition verschenken kann,
- eine Arbeitseinheit (5), die mit dem Trägerarm (3) in einer solchen Weise verbunden ist, dass die Arbeitseinheit (5) relativ zu dem Trägerarm (3) in der Längsrichtung des Trägerarms (3) versetzt werden kann, um die Position der Arbeitseinheit (5) relativ zu dem Zentralrahmen (2) einzustellen,
- eine Druckentlastungsvorrichtung (6) zum Aufbringen einer aufwärts gerichteten Entlastungskraft auf den Trägerarm (3) in der Arbeitsposition, wobei die Druckentlastungsvorrichtung (6) mit einem Ende mit dem Zentralrahmen (2) und mit dem anderen Ende mit dem Trägerarm (3) verbunden ist, **dadurch gekennzeichnet, dass** die Druckentlastungsvorrichtung (6) in einer solchen Weise ausgebildet ist, dass in der Arbeitsposition der landwirtschaftlichen Maschine (1) der Abstand zwischen der Arbeitseinheit (5) und der Armachse (4) mit der durch die Druckentlastungsvorrichtung (6) aufgebrachten Entlastungskraft so positiv korreliert ist, dass ein größerer Abstand eine größere Entlastungskraft hervorruft.

2. Landwirtschaftliche Maschine (1) nach Anspruch 1, **dadurch gekennzeichnet, dass** die Druckentlastungsvorrichtung (6) ein als Feder (26) ausgebildetes Druckentlastungselement aufweist und die Entlastungskraft von der Länge der Feder (26) abhängt.

3. Landwirtschaftliche Maschine (1) nach Anspruch 1, **dadurch gekennzeichnet, dass** die Druckentlastungsvorrichtung (6) ein Druckentlastungselement aufweist, das als Hydraulikzylinder (11) mit einer Kammer ausgebildet ist, die fließend mit einem Gasspeicher (7) verbundenen ist.

4. Landwirtschaftliche Maschine (1) nach Anspruch 2 oder 3, **dadurch gekennzeichnet, dass** der Trägerarm (3) einen mit dem Trägerarm (3) über eine Hebelachse (8) verbundenen Hebel (9) aufweist, der mit dem Druckentlastungselement (26) verbunden ist und der mit einem Zugelement (10) verbunden ist, das die Arbeitseinheit (5) mit dem Hebel (9) verbindet.

5. Landwirtschaftliche Maschine (1) nach einem der vorhergehenden Ansprüche, **dadurch gekennzeichnet, dass** die landwirtschaftliche Maschine (1) ein Liftelement (11) zum Anheben des Trägerarms (3) von einer Arbeitsposition in eine Transportposition und/oder eine Vorgewendeposition aufweist, wobei das Liftelement (11) an einem Ende mit der Hebelachse (8) und an dem anderen Ende mit dem Zentralrahme (2) verbunden ist.

6. Landwirtschaftliche Maschine (1) nach Anspruch 1, **dadurch gekennzeichnet, dass** das Liftelement (11) einen hydraulischen Transportzylinder (12) und einen hydraulischen Anbauzylinder (13) aufweist, die miteinander verbunden sind.

7. Landwirtschaftliche Maschine (1) nach einem der vorhergehenden Ansprüche, **dadurch gekennzeichnet, dass** die Arbeitseinheit (5) mit einem Prismawagen (14) verbunden ist, der in einer Prismaführung (15) zumindest entlang eines Teils des Trägerarms (3) verschieblich ist.

8. Landwirtschaftliche Maschine (1) nach einem der Ansprüche 1 bis 6, **dadurch gekennzeichnet, dass** der Trägerarm (3) einen an dem Zentralrahmen (2) befestigten ersten Arm (16) und einen zweiten Arm (17) aufweist, der beweglich an dem ersten Arm (16) angeordnet ist, wobei der zweite Arm (17) mit der Arbeitseinheit (5) verbunden ist.

9. Landwirtschaftliche Maschine (1) nach Anspruch 1, **dadurch gekennzeichnet, dass** der zweite Arm (17) relativ zu dem ersten Arm (16) teleskopierbar beweglich ist.

10. Landwirtschaftliche Maschine (1) nach Anspruch 1, **dadurch gekennzeichnet, dass** der zweite Arm (17) relativ zu dem ersten Arm (16) verschwenkbar ist.

11. Landwirtschaftliche Maschine (1) nach einem der vorhergehenden Ansprüche, **dadurch gekennzeichnet, dass** der Trägerarm (3) ein Längenelement zum Einstellen der Position der Arbeitseinheit (5) in mindestens der Arbeitsposition aufweist, wobei das Längenelement einen einstellbaren Balken (18) aufweist.

12. Landwirtschaftliche Maschine (1) nach einem der vorhergehenden Ansprüche, **dadurch gekennzeichnet, dass** der Trägerarm (3) ein Längenelement zum Einstellen der Position der Arbeitseinheit (5) in mindestens der Arbeitsposition relativ zu der Armachse (4) aufweist, wobei das Längenelement einen hydraulischen Einstellzylinder (19) aufweist.

13. Landwirtschaftliche Maschine (1) nach einem der vorhergehenden Ansprüche, **dadurch gekennzeichnet, dass** der Trägerarm (3) einen Abstandssensor (20) zum Erfassen des Abstands der Arbeitseinheit (5) relativ zu der Armachse (4) und zum Abgeben eines Abstandssignals aufweist, und wobei die Druckentlastungsvorrichtung (6) durch das Abstandssignal steuerbar/regelbar ist.

14. Landwirtschaftliche Maschine (1) nach Anspruch 13, **dadurch gekennzeichnet, dass** das Druckentlastungselement (6) das Liftelement (11) ist.

15. Landwirtschaftliche Maschine (1) nach einem der vorhergehenden Ansprüche, **dadurch gekennzeichnet, dass** die Arbeitseinheit (5) ein um eine vertikale Achse drehbares Harkenrad (21) oder ein Mähwerk ist.

16. Landwirtschaftliche Maschine (1) nach einem der Ansprüche 4 bis 15, **dadurch gekennzeichnet, dass** das Zugelement (10) mit einem langgestreckten Element verbunden ist, das trennbar mit der Arbeitseinheit (5) verbindbar ist.

## Revendications

1. Machine agricole (1), en particulier, machine de fenaison, par exemple un râteau rotatif, la machine agricole (1) comprenant :
- un bâti central (2),
- au moins un bras porteur (3) qui est relié au bâti central (2) d'une telle manière que le bras porteur (3) peut pivoter autour d'un axe de bras horizontal (4) en position de travail,
- une unité de travail (5) qui est reliée au bras porteur (3) d'une telle manière que l'unité de travail (5) peut être déplacée, telle que vue dans la direction longitudinale du bras porteur (3), par rapport au bras porteur (3) afin de régler la position de l'unité de travail (5) par rapport au bâti central (2),
- un dispositif de limitation de pression (6) destiné à appliquer un effort de limitation vers le haut sur le bras porteur (3) dans la position de travail, ledit dispositif de limitation de pression (6) étant couplé à une première extrémité au bâti central (2) et à l'autre au bras porteur (3), **caractérisée en ce que** le dispositif de limitation de pression (6) est conçu d'une telle manière que, dans la position de travail de la machine agricole (1), la distance entre l'unité de travail (5) et l'axe de bras (4) varie en fonction de l'effort de limitation appliqué par le dispositif de limitation de pression (6) de telle sorte qu'une distance supérieure induit un effort de limitation supérieur.

2. Machine agricole (1) selon la revendication 1, **caractérisée en ce que** le dispositif de limitation de pression (6) comprend un élément de limitation de pression conçu comme un ressort (26) et l'effort de limitation dépend de la longueur du ressort (26).

3. Machine agricole (1) selon la revendication 1, **caractérisée en ce que** le dispositif de limitation de pression (6) comprend un élément de limitation de pression conçu comme un vérin hydraulique (11) avec une chambre couplée de manière fluidique à un accumulateur de gaz (7).

4. Machine agricole (1) selon la revendication 2 ou 3, **caractérisée en ce que** le bras porteur (3) comprend un levier (9) couplé au bras porteur (3) par l'intermédiaire d'un axe de levier (8), couplé à l'élément de limitation de pression (26) et couplé à un élément de traction (10), l'élément de traction (10) reliant l'unité de travail (5) au levier (9).

5. Machine agricole (1) selon l'une des revendications précédentes, **caractérisée en ce que** la machine agricole (1) comprend un élément de levage (11) destiné à soulever le bras porteur (3) depuis une position de travail vers une position de transport et/ou de tête de champ, l'élément de levage (11) étant couplé, à une première extrémité, à l'axe de levier (8) et, à l'autre extrémité, au bâti central (2).

6. Machine agricole (1) selon la revendication 5, **caractérisée en ce que** l'élément de levage (11) comprend un vérin de transport hydraulique (12) et un vérin de palier hydraulique (13) qui sont couplés l'un à l'autre.

7. Machine agricole (1) selon l'une des revendications précédentes, **caractérisée en ce que** l'unité de travail (5) est reliée à un chariot de prisme (14) lequel chariot de prisme (14) peut être déplacé avec un guide de prisme (15) le long d'au moins une partie du bras porteur (3).

8. Machine agricole (1) selon l'une des revendications 1 à 6, **caractérisée en ce que** le bras porteur (3) comprend un premier bras (16) fixé sur le bâti central (2) et un second bras (17) fixé de manière à pouvoir se déplacer sur le premier bras (16), lequel second bras (17) est relié à l'unité de travail (5).

9. Machine agricole (1) selon la revendication 8, **caractérisée en ce que** le second bras (17) peut se déplacer de manière télescopique par rapport au premier bras (16).

10. Machine agricole (1) selon la revendication 8, **caractérisée en ce que** le second bras (17) peut pivoter par rapport au premier bras (16).

11. Machine agricole (1) selon l'une des revendications précédentes, **caractérisée en ce que** le bras porteur (3) comprend un élément allongé destiné à régler la position de l'unité de travail (5) au moins dans la position de travail, lequel élément allongé comprend une barre réglable (18).

12. Machine agricole (1) selon l'une des revendications précédentes, **caractérisée en ce que** le bras porteur (3) comprend un élément allongé destiné à régler la position de l'unité de travail (5) au moins dans la position de travail par rapport à l'axe de bras (4), lequel élément allongé comprend un vérin de réglage hydraulique (19).

13. Machine agricole (1) selon l'une des revendications précédentes, **caractérisée en ce que** le bras porteur (3) comprend un capteur de distance (20) destiné à détecter la distance de l'unité de travail (5) par rapport à l'axe de bras (4) et à émettre un signal de distance, et ainsi, le dispositif de limitation de pression (6) peut être commandé par le signal de distance.

14. Machine agricole (1) selon la revendication 13, **caractérisée en ce que** l'élément de limitation de pression (6) est l'élément de levage (11).

15. Machine agricole (1) selon l'une des revendications précédentes, **caractérisée en ce que** l'unité de travail (5) est une roue de râteau (21) pouvant tourner autour d'un axe vertical ou une unité de moissonnage.

16. Machine agricole selon l'une quelconque des revendications 4 à 15, **caractérisée en ce que** l'élément de traction (10) est relié à un élément allongé qui peut être relié de manière amovible à l'unité de travail (5).
